# EUROPÄISCHE PATENTANMELDUNG

(11) **EP 1 329 968 A2**
(43) Veröffentlichungstag der Anmeldung: **23.07.2003**
(21) Anmeldenummer: 03000121.8
(22) Anmeldetag: 03.01.2003
(51) Int. Cl.: H01M 8/02, H01M 8/10, H01M 10/36, H01M 10/40, H01M 6/18

(54) **Funktionsfolie, Verfahren zur Herstellung einer derartigen Funktionsfolie sowie Verwendung derselben**

(30) Priorität: 04.01.2002 DE 10200162
(71) Anmelder: Rennebeck, Klaus, 73240 Wendlingen (DE)
(72) Erfinder: Rennebeck, Klaus, 73240 Wendlingen (DE)
(74) Vertreter: Patentanwälte Hosenthien-Held und Dr. Held

(57) **Zusammenfassung**

Die Erfindung betrifft eine Funktionsfolie (201), wobei die Funktionsfolie (201) Vertiefungen (202) aufweist, sowie deren Herstellung mittels Umformen.

## Beschreibung

Die Erfindung betrifft eine Funktionsfolie, umfassend einen Feststoffelektrolyten, der eine katalytisch wirksame Anode und eine katalytisch wirksame Kathode trennt. Dabei kann die Funktionsfolie selbst auch Beschichtungen aufweisen, beispielsweise kann die Anode und/oder Kathode als Beschichtung an der Funktionsfolie vorgesehen sein.

Bekannt sind eine Vielzahl flächenartiger, ebener Funktionsfolien, sowie auch als Röhrchen oder Hohlfasern ausgebildete Funktionsfolien, wie sie beispielsweise in der PCT/EP97/00255, der PCT/EP98/02410, der PCT/EP98/04410, der PCT/EP98/08432, der PCT/EP00/02208, der PCT/EP00/02973, der PCT/EP99/05317 und der DE 198 60 056 A1 beschrieben sind. Der Offenbarungsgehalt dieser Anmeldungen wird vollinhaltlich zum Bestandteil der vorliegenden Anmeldung gemacht, insbesondere in Hinblick auf die verwendeten Materialien.

Der Erfindung liegt die Aufgabe zu Grunde, eine Funktionsfolie der eingangs genannten Art weiter zu entwickeln und zu verbessern.

Diese Aufgabe wird erfindungsgemäß durch eine Funktionsfolie mit den Merkmalen des Anspruches 1 gelöst. Vorteilhafte Ausgestaltungen sind Gegenstand der Unteransprüche.

Bei der Funktionsfolie, die erfindungsgemäß Vertiefungen aufweist, die vorzugsweise in Folge eines Umform- oder Formvorganges erzeugt wurden, handelt es sich um eine Funktionsfolie, die einen Feststoffelektrolyten bzw. eine Membran umfasst, der eine katalytisch wirksame Anode und eine katalytisch wirksame Kathode trennt. Dabei liegen diese vorzugsweise in diffusionsfähiger, offenzelliger und mobiler Form vor.

Unter einem Feststoffelektrolyten wird ein Elektrolyt verstanden, der in der Lage ist, Protonen oder Ionen zu leiten. Die erfindungsgemäße Funktionsfolie kann bei der Elektrolyse, bei der durch Einleiten von Strom Wasser zersetzt wird, verwendet werden, aber auch in der Brennstoffzelle, in der Strom gewonnen wird. Sie könnte auch in der Fotovoltaik verwendet werden, wobei hier der Feststoffelektrolyt ein Absorber ist. Ferner kann sie bei der Katalyse und in der Elektrodialyse verwendet werden. Weitere Anwendungen sind die Verwendung in bipolare Zellen, die Verwendung zur Messung von Sauerstoff (Sauerstoff-Sensor), beispielsweise als Lambda-Sonde.

Diffusionsfähig bedeutet hierbei im folgenden, dass Stoffströme die Elektroden ausreichend passieren können. Genauer ausgedrückt bedeutet diffusionsfähig, dass sich Brennstoff und Oxidationsmittel zu dem gewünschten Reaktionsprodukt, vorzugsweise Wasser, vereinen können.

Vorliegen in offenzelliger Form bedeutet, dass sowohl die einzelnen Partikel Hohlräume aufweisen als auch dass zwischen den einzelnen Partikeln Zwischenräume vorhanden sind, d.h. die Partikel insgesamt verhalten sich wie Molekularsiebe oder Aktivkohle oder Zeolithe. Durch das Vorliegen dieser kommunizierender Hohl- und Zwischenräume werden die katalytischen Eigenschaften verbessert und die Diffusionsfähigkeit in alle Richtungen gewährleistet, da die vorhandenen Stoffströme effektiver sind. Auch eine gute elektrische Leitfähigkeit ist gewährleistet. Die offenzellige Form gewährleistet eine größtmögliche Diffusion bei geringstem Stromwiderstand oder geringster Flussbehinderung, wobei sich der Einsatz von zusätzlichen Diffusionselektroden erübrigt.

Mobil bzw. auch vagabundierend bedeutet, dass die, durch den Feststoffelektrolyten getrennten, diffusionsfähigen, katalytisch wirksamen Elektroden nicht fixiert, sondern leicht ersetzbar sind. Die mobilen Elektroden sind fluidisierbar, d.h. mit einem Flüssigkeitsoder Gasstrom locker- bzw. anhebbar. Um zu testen, ob eine mobile Form vorliegt, gibt man eine Funktionsfolie auf einen flächig ausgestalteten Integralfestbettreaktor. Legt man nun atmosphärischen Druck an und die Partikel bewegen sich, dann liegt eine mobile Form vor. Kommt es dagegen zu keiner Bewegung der Partikel, dann liegt eine immobile Form vor. Hierbei handelt es sich um einen auf dem hier in Rede stehenden Fachgebiet üblichen Test. Dieser ist z.B. im Zusammenhang mit SCR- (Selective Catalytic Reduction) und NSCR-Katalyseverfahren bekannt. Kommt es auf Grund der Umgebungsatmosphäre bzw. bei Nutzung der Funktionsfolie zu einer Sedimentation der Partikel, d.h. zur Bildung einer Filterkuchens, auch Filertrikot genannt, dann bleibt die Mobilität erhalten.
Die offenzellige Form bzw. Anordnung bleibt bei der Bildung eines Filterkuchens ebenfalls vollständig erhalten, so dass die Diffusionsfähigkeit durch die Bildung des Filterkuchens nicht beeinflusst wird.

Die Partikel liegen vorzugsweise in Form von Nanopartikeln mit einem Durchmesser von bis zu etwa 100.000 nm, vorzugsweise bis zu etwa 50.000 nm und insbesondere bis zu etwa 20.000 nm vor. Durch die Verwendung von Nanopartikeln wird eine größere Oberfläche erzielt, da diese den gesamten Feststoffelektrolyten einbetten können.

Die Partikel werden bevorzugt als Aufmahlung vorzugsweise aus Fasern oder Filamenten in Profilform, Vieleckform oder als Hohlfasern gewonnen. Die Partikel können auch mit einem Sprühverfahren gewonnen werden.

Wenn die Elektroden nicht in immobilisierter Form, sondern mobil, vorliegen, ist ein Austausch derselben ohne großen Aufwand, beispielsweise durch Absaugen im Vakuum, möglich. Dies hat den Vorteil, dass beim Ausfall einzelner Elektroden nicht die gesamte Funktionsfolie ausgetauscht werden muss, sondern nur der nicht mehr funktionsfähige Bestandteil.

In Abhängigkeit von der gewünschten Anwendung ist der Feststoffelektrolyt aus unterschiedlichsten Materialien aufgebaut. Soll beispielsweise der Feststoffelektrolyt die Diffusion von Wasserstoff erlauben, wie in PEM-Brennstoffzellen (Polymerelektrolytmembran-Brennstoffzellen), dann kann dieser aus einem polymeren Material aufgebaut sein.
Dabei kann dieses polymere Material fluoriert, phosphatiert und/oder sulfoniert sein. Der Einsatz von Polytetrafluorethylen in sulfonierter Form und Polyetheretherketon (PEEKK) ist bevorzugt. Da bei PEM-, d.h. Nieder-Temperatur-Brennstoffzellen, die Betriebstemperatur bei 0 bis 140°C, insbesondere bei 35 bis 120°C, liegt, ist mit einem Kondensat (Aspiration) auf der Oxidationsstromseite des Feststoffeletrolyten zu rechnen, wodurch es zu einer Befeuchtung kommt. Im Falle von SOFC-Brennstoffzellen (oxidkeramischen Brennstoffzellen) wird als Ausgangsmaterial Zirkoniumdioxid, das vorzugsweise mit ScOₓ (Scandiumoxid), LaOₓ (Lanthanoxid), CeOₓ (Ceroxid), MnOₓ (Manganoxid) und/oder YOₓ (Yttriumoxid), insbesondere mit ScOₓ und YOₓ dotiert ist, bevorzugt. Bei SOFC-, d.h. Hoch-Temperatur-Brennstoffzellen, beträgt die Betriebstemperatur 380 bis 1050°C. Hier entsteht auf der Brennstoffseite des Feststoffelektrolyten kein Kondensat (Aspiration), da Wasser ausschließlich in gasförmigem Aggregatzustand vorliegt. Funktionsfolien aus anderen Materialien, die sich entsprechend gestalten, insbesondere umformen, lassen, sind ebenfalls möglich.

Der Feststoffelektrolyt ist vorzugsweise annähernd gradientenfrei, d.h. er weist keine Löcher auf und hat eine möglichst regelmäßige Wandstärke, wobei an den Übergängen möglichst sanfte Übergänge zwischen den unterschiedlichen Wandstärken vorgesehen sind. Hierbei ist die Wandstärke im Bereich der Vertiefung(en) geringer als die Wandstärke im ebenen Bereich. Die Wandstärke, insbesondere im Bereich der Vertiefungen, lieg üblicherweise unter 50µm, jedoch unterschreitet 0,05µm nicht. Die annährende Gradientenfreiheit hat den Vorteil, dass eine gute Isotherme erreicht wird.

Die Anode ist bevorzugt aus elektrische leitendem Graphit, Ruß, Perowskit (CaTiO₃), elektrisch leitender Aktivkohle oder Kombinationen dieser Materialien aufgebaut. Die Kathode ist bevorzugt aus elektrisch leitendem Graphit, Ruß, Perowskit, elektrisch leitender Aktivkohle, Metallen, vorzugsweise Nickel (Ni), Kupfer (Cu), Zink (Zn) und Tantal (Ta) oder Kombinationen dieser Materialien aufgebaut. Nickel, Kupfer und Zink sind preiswert. Ferner schützen Kupfer und Zink die eingesetzten Katalysatoren, insbesondere beim Arbeiten mit MeOH. Die Anode und die Kathode sind vorzugsweise aus dem selben Material aufgebaut.

Als Katalysatoren kommen alle bewährten Materialien in Frage, insbesondere Materialien der achten Nebengruppe des Periodensystems, wie schweres und leichtes Platin (Pt) und Palladium (Pd), Ruthenium (Ru) und Rhodium (Rh), aber auch Kupfer und Zink. Ferner können als Katalysator-Materialien Kupferoxid, Zinkoxid, Al₂O₃, Kupfer und Zink auf Al₂O₃, TiO₂ (insbesondere in seiner Anastasform), WO₃, V₂O₅, Fe₃O₄, Fe₂O₃, Molybdänoxide, Nickeloxide sowie Mischoxide hiervon, Aluminosilikate, wie beispielsweise Cordierit, Spinelle, auch mit Spuren von Strontium, Zeolithe, wie beispielsweise Faujasit, SiC, Hämatit, Magnetit und Aktivkohle, eingesetzt werden.

Es ist bevorzugt, dem katalytischen Anoden- und Kathodenmaterial ferromagnetisches Material hinzuzugeben, da hierdurch der Katalysator zusätzlich geschützt wird, wodurch die Protonen- bzw. Ionen-Leitfähigkeit verbessert wird. Als ferromagnetisches Material ist insbesondere Fe(II)oxid, insbesondere in Kombination mit Aktivkohle, geeignet.

In Hinblick auf die vorliegend verwendete Bezeichnung "keramisches Material" sei angemerkt, dass diese Bezeichnung vorliegend in ihrem weitesten Sinne verwendet wird. Es handelt sich hierbei um eine Sammelbezeichnung für aus anorganischen und überwiegend nicht metallischen Verbindungen oder Elementen aufgebauten Materialien, die insbesondere zu mehr als 30% kristallisierte Materialien darstellen. In diesem Zusammenhang sei auf Römpp Chemie Lexikon, 10. Aufl., Bd. 3, S. 2113 f. verwiesen. Vorzugsweise bestehen die Keramik-Folien aus einem oxidischen, silicatischen, nitritischen und/oder carbidischen Keramikmaterial. Besonders bevorzugt sind solche Keramikmaterialien auf der Basis von Aluminiumoxid, Calciumphosphat (Apatit) oder verwandte Phosphaten, porzellan- oder cordieritartigen Zusammensetzungen, Mullit, Titanoxid, Titanaten, Zirkonoxid, Zirkonsilikat, Zirkonaten, Spinellen, Smaragd, Saphir, Korund, Nitriden oder Carbiden von Silicium oder anderen chemischen Elementen oder deren Mischungen. Hierbei sind insbesondere die kristallinen Vorprodukte extrem fein aufgemahlen. Als Dotierungsmittel werden gegebenenfalls die in der Keramik bekannten Stoffe, wie MgO, CaO, ZrO₂, ZrSiO₄,Y₂O₃ u.a. oder deren Vorläufer den anorganischen Hauptbestandteilen zugesetzt.

Bevorzugt weisen die Vertiefungen ein Durchmesser-Längen-Verhältnis 1:1 bis 1:100, vorzugsweise 1:5 bis 1:10, auf, wobei unter Durchmesser der hydraulisch gleichwertige Durchmesser verstanden werden soll. Der hydraulisch gleichwertige Durchmesser beträgt vorzugsweise 1 bis 3000µm.

Gemäß einer bevorzugten Ausführungsform sind Versteifungen an der Mantelfläche der Vertiefung vorgesehen, wobei die Vertiefung durch Strukturierung(en) versteift wird.

Die Vertiefung kann als Zu-/Ableitung dienen, wobei eine elastische (vorzugsweise mit "textilen" Eigenschaften, d.h. eine entsprechende Hohlfaser könnte prinzipiell entsprechend einem textilen Faden verarbeitet werden) oder nicht elastische Ausgestaltung möglich ist.

Bevorzugt werden die erfindungsgemäßen Funktionsfolien in Brennstoffzellen oder für die Elektrolyse verwendet. Hierbei sind die einzelnen Funktionsfolien derart angeordnet, dass sie - entsprechend der Anordnung ihrer Vertiefungen - gestapelt sind. Hierbei können auch entsprechend ausgebildete, offene und geschlossene Funktionsfolien abwechselnd gestapelt sein. Dabei können im Falle von Brennstoffzellen Spannungen von über 42V erreicht werden. Ferner kann eine erfindungsgemäße Funktionsfolie auch in Chipkarten-Batterien vorgesehen sein, oder für Elektromotorantriebe (in Kaskadenschaltung).

Gemäß einer anderen Ausführungsform für eine andere Verwendung ist die Vertiefung unten verschlossen, d.h. die Vertiefung weist eine Art Klöpperboden auf. Diese Ausführungsform kann vorzugsweise zur Untersuchung der Wirksamkeit von Medikamenten verwendet werden.

Zur Herstellung werden PEM-Funktionsfolien oder Verbunde von einer katalytischen Elektrode, einer Membran und einer weiteren katalytische Elektrode, insbesondere in einem einzigen Arbeitsschritt, umgeformt, so dass die erfindungsgemäßen Vertiefung ausgebildet wird. Hierzu wird die Funktionsfolie (Rohling) vorzugsweise unter einer vorgegebenen Atmosphäre erwärmt. Dabei kann das "Vertiefen" in einen Prägevertiefungshohlraum mittels eines Prägeverfahrens erfolgen. Andere Umformverfahren, wie Tiefziehen sind ebenfalls möglich. Im Anschluss an den Umformvorgang kann sich ein Sintervorgang anschließen.

Gemäß einer alternativen Herstellungsmethode kann eine Kathode, insbesondere eine Perowski-Keramik-Kathode, nach der Formgebung und dem Sintern mit dem Feststoffelektrolyten-Material beschichtet werden. Bevorzugt erfolgt anschließend eine weitere Beschichtung mit dem Material der Anode.

Die Vertiefung(en) sind vorzugsweise im wesentlichen zylinderförmig oder kegelstumpfförmig ausgebildet.

Zur Herstellung einer Funktionsfolie aus einem keramischen Vorläufermaterial werden entsprechende Grünlingsfolien (Bräunlingsfolien) in einem Arbeitsschritt aus- oder umgeformt, so dass Vertiefungen ausgebildet sind, und anschließend gesintert. Die weiteren Funktionsschichten erhält die Funktionsfolie beispielsweise mittels Sputtern.

Entsprechend einer weiteren, alternativen Herstellungsmethode wird die Funktionsfolie nach der Formgebung mit einer oder beider Elektroden beschichtet. Besonders bevorzugt können auch mehlige, vagabundierende Partikel als Katalysatoren-Elektroden für die Anode und/oder Kathode vorgesehen sein.

Im folgenden ist die Erfindung anhand von Ausführungsbeispielen unter Bezugnahme auf die beigefügte Zeichnung näher erläutert. Es zeigen
- Fig. 1: eine schematisch Darstellung eines ersten Ausführungsbeispiels,
- Fig. 2: einen Schnitt durch ein Röhrchen von Fig. 1,
- Fig. 3: eine leicht schematisierte Anordnung gemäß Fig. 1,
- Fig. 4: ein zweites Ausführungsbeispiel,
- Fig. 5: ein drittes Ausführungsbeispiel, und
- Fig. 6-8: Darstellungen weiterer Varianten von Funktionsfolien in geschnittener Darstellung.

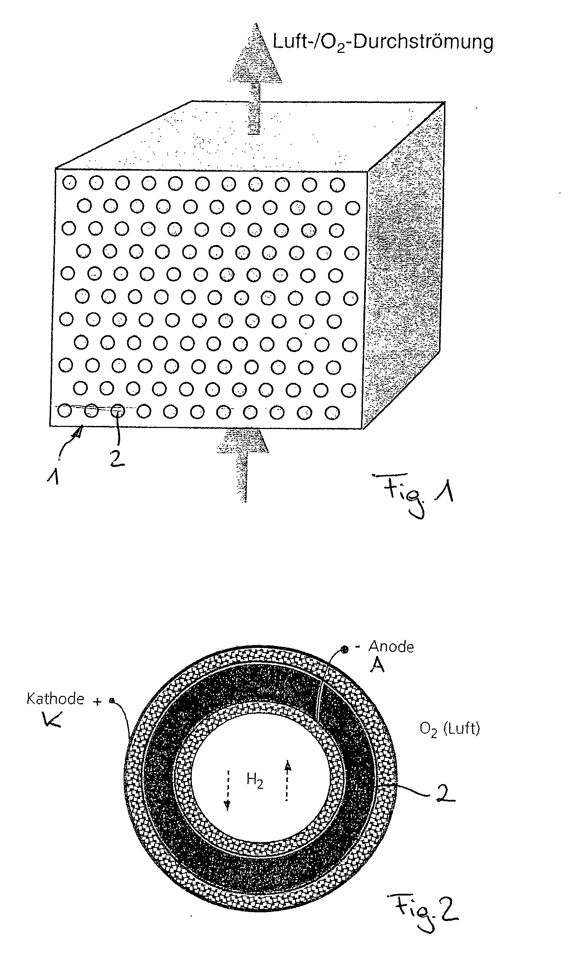

Fig. 1 zeigt eine Funktionsfolie 1, vorliegend eine PEM-Funktionsfolie, welche als Brennstoffzelle verwendet wird, mit im wesentlichen zylinderförmigen Vertiefungen 2, wobei sich der Durchmesser der Röhrchen oder Tubuli nach unten hin nur minimal verringert. Die Röhrchen sind unten offen und weisen einen hydraulisch gleichwertigen Durchmesser (also vorliegend einen minimalen Innendurchmesser) von 30 µm auf. Die Funktionsfolie 1 ist im ebenen Bereich ca. 15 µm dick, wobei die Wandstärke im Bereich der Vertiefungen 2 vorliegend herstellungsbedingt deutlich geringer als die Foliendicke 1 im ebenen Bereich ist, welche annähernd der ursprünglichen Dicke der Funktionsfolie 1 entspricht.

Wie Fig. 1 zu entnehmen ist, sind die Vertiefungen 2 versetzt angeordnet.

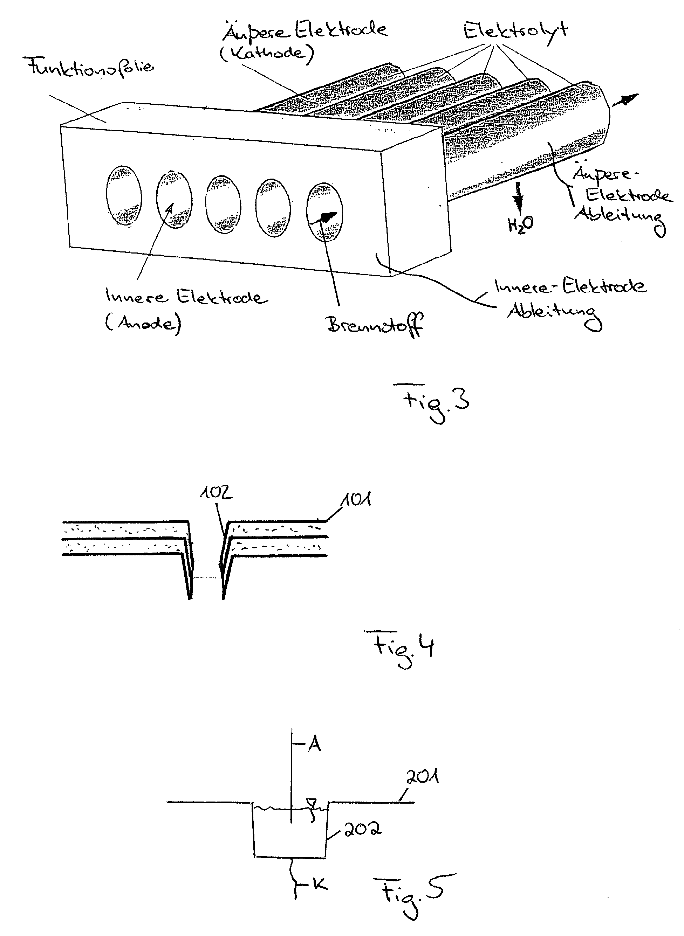

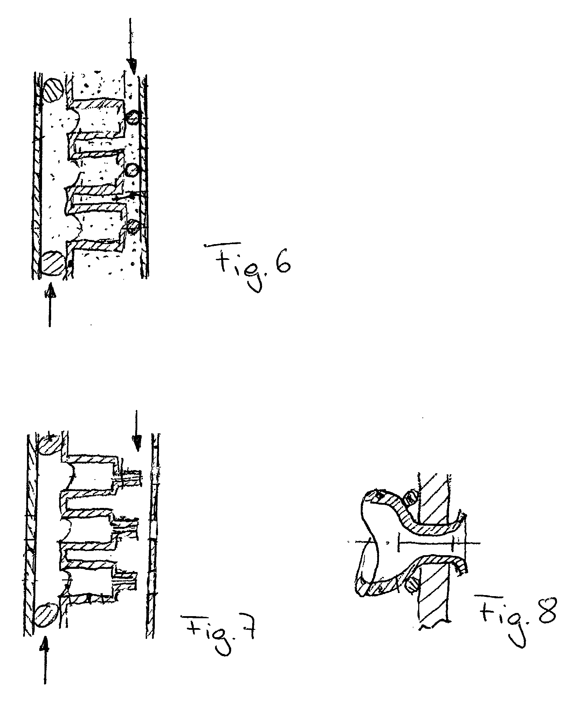

Fig. 2 zeigt einen Querschnitt durch ein Röhrchen, einschließlich der Elektroden A (Anode) und K (Kathode), wobei die Kontaktierung nur schematisiert dargestellt ist. Das Innere der Röhrchen wird von Wasserstoff durchströmt, der als Brennstoff dient. In Fig. 3 ist eine entsprechende Ansicht der Funktionsfolie 1 dargestellt. Die Röhrchen selbst werden von Sauerstoff (Luft) außen umströmt. Die Elektroden A und K sind vorliegend durch Beschichtungen mit Kohle gebildet. Die Brennstoffzelle arbeitet bei relativ niedrigen Temperaturen (0-140°C). Die Ableitungen sind in Fig. 2 und 3 symbolisch dargestellt.

Gemäß einem zweiten Ausführungsbeispiel sind, wie in Fig. 4 dargestellt, mehrere gleich ausgebildete Funktionsfolien 101 mit röhrchenbildenden, kegelstumpfförmigen Vertiefungen 102 in axialer Richtung der Vertiefungen 102 gestapelt, wobei zwischen den einzelnen als Elektrolyten dienenden Funktionsfolien 101 mobile Anoden A (bspw. Kohlestaub) und Kathoden K (bspw. Kohlestaub) vorgesehen sind.

In Fig. 4 ist eine kegelstumpfförmige, unten offene Ausgestaltung von Vertiefungen 102 einer Funktionsfolie 101 dargestellt, wobei mehrere Funktionsfolien 101 gestapelt angeordnet sind. Hierbei sind zwischen den einzelnen Funktionsfolien 101 Elektroden in Form von vagabundierender, mehliger Kohle vorgesehen, die vom entsprechenden Betriebsstoff umspült sind.

Fig. 5 zeigt eine weitere Funktionsfolie 201 mit einer im wesentlichen zylinderförmigen Vertiefung 202, die unten geschlossen ist, d.h. einen Boden aufweist. Die Vertiefung hat einen hydraulisch gleichwertigen Durchmesser von 10 mm im Bereich des Bodens. Eine Elektrode, vorliegend die Kathode K ist am Boden der Vertiefung 202 angeschlossen und die andere Elektrode, d.h. vorliegend die Anode A, ragt in Form eines Drahtes oder Stiftes in das Innere der Vertiefung 202.

Diese Funktionsfolie 201 dient zu einem Test der Wirksamkeit von Medikamenten bei einem bestimmten Patienten (Freeflow Elektrophorese - FFE). Hierfür wird in die Vertiefung 202 eine Körperflüssigkeit des Patienten, beispielsweise Blut, ohne und in einem oder mehreren weiteren Tests mit bestimmten Dosen des Medikaments eingefüllt. Der pH-Wert liegt dabei üblicherweise zwischen 3 und 10. Zur Durchführung des Tests wird über die Elektroden A, K eine Spannung angelegt, wobei die Wirksamkeit eines Medikaments bei dem Patienten aus dem Stromverlauf, d.h. dem Widerstandsverlauf, abgelesen werden kann. Um gemittelte Werte zu erhalten, können mehrere Vertiefungen mit entsprechender Elektrodenanordnung vorgesehen sein. Alternativ kann auch jede Vertiefung eine andere Probe enthalten.

Zur Spannungserhöhung können hierbei auch abwechselnd geschlossene und offene erfindungsgemäße Funktionsfolien übereinandergestapelt werden, wobei hierbei die Vertiefungen kegelstumpfförmig ausgebildet sind. Auf diese Weise können Spannungen erzeugt werden, die üblicherweise kleiner als 42 V sind, jedoch sind auch deutlich höhere Spannungen möglich.

In den weiteren Figuren sind andere Ausführungsformen dargestellt, wobei die Vertiefungen unterschiedliche Durchmesserverläufe aufweisen.

Fig. 6 zeigt eine Variante mit geschlossenem Boden. Hierbei ist eine Abdeckung (in Fig. 6 rechts von oben nach unten verlaufend dargestellt) mittig am Boden angebracht, bspw. mittels Kleben oder Schweißen (siehe entsprechende Klebestelle zwischen Boden und Abdeckung). Dabei wird die Abdeckung ihrerseits bevorzugt ebenfalls durch einen Feststoffelektrolyten gebildet. Entsprechendes gilt auch für die zweite Abdeckung, die auf der gegenüberliegenden Seite der erfindungsgemäßen Funktionsfolie angebracht ist. Zwischen den beiden Abdeckungen und der Funktionsfolie ist eine betriebsstoffumspülte, katalytische Elektrode, vorliegend pulverförmig (mit nano-/mikrofeinen Teilchen), angeordnet, in Fig. 6 durch kleine Punkte angedeutet. Die Strömungsrichtungen der Betriebsstoffe sind mittels Pfeilen angedeutet.

Fig. 7 und 8 zeigen eine Variante von Fig. 6, wobei hierbei ein offener Boden vorgesehen ist. Dabei durchdringt das Ende der Vertiefungen jeweils die entsprechende Abdeckung, wie in Fig. 8 ausschnittsweise vergrößert dargestellt ist. Fig. 7 zeigt die Funktionsfolie vor dem Zusammenbau mit der Abdeckung. Zur Abdichtung zwischen Abdeckung und Funktionsfolie sind beim Durchtritt Klebenähte oder Schweißnähte vorgesehen. Ferner kann das Ende aufgeweitet sein, wie in Fig. 8 dargestellt. Ansonsten entspricht diese Variante der in Fig. 6 dargestellten Variante.

## Patentansprüche

1. Funktionsfolie, umfassend einen Feststoffelektrolyten, der eine katalytisch wirksame Anode (A) und eine katalytisch wirksame Kathode (K) trennt, **dadurch gekennzeichnet, dass** die Funktionsfolie (1; 101; 201) zumindest eine Vertiefung (2; 102; 202) aufweist.

2. Funktionsfolie nach Anspruch 1, **dadurch gekennzeichnet, dass** die Vertiefung (2; 102; 202) in einer Richtung in einem Winkel von 90° bis 120° zur Ebene der Funktionsfolie (1; 101; 201) angeordnet sind.

3. Funktionsfolie nach Anspruch 2, **dadurch gekennzeichnet, dass** keine Hinterschneidungen vorgesehen sind.

4. Funktionsfolie nach einem der vorhergehenden Ansprüche, **dadurch gekennzeichnet, dass** die Vertiefung (2; 102) an ihrem unteren Ende offen ist.

5. Funktionsfolie nach einem der vorhergehenden Ansprüche, **dadurch gekennzeichnet, dass** die Vertiefung (2; 102; 202) am unteren Ende einen hydraulisch gleichwertigen Innendurchmesser von minimal 3 µm und maximal 10 mm aufweist.

6. Funktionsfolie nach einem der vorhergehenden Ansprüche, **dadurch gekennzeichnet, dass** der hydraulisch gleichwertige Innendurchmesser der Vertiefung (2; 102; 202) im Verhältnis zu den Längen der Vertiefung (2; 102; 202) 1:1 bis 1:100, vorzugsweise 1:5 bis 1:10 beträgt.

7. Funktionsfolie nach einem der vorhergehenden Ansprüche, **dadurch gekennzeichnet, dass** die Funktionsfolie (101) in einem Stapel angeordnet ist.

8. Funktionsfolie nach Anspruch 7, **dadurch gekennzeichnet, dass** die offenen oder geschlossenen Vertiefungen (2; 102) der einzelnen Funktionsfolien (101) des Stapels in entsprechenden offenen oder geschlossenen Vertiefungen (2; 102) anderer Funktionsfolien (101) des Stapels angeordnet sind.

9. Funktionsfolie nach einem der vorhergehenden Ansprüche, **dadurch gekennzeichnet, dass** an der Funktionsfolie (1; 101; 201) eine Anode (A) und/oder Kathode (K) vorgesehen ist, die in diffusionsfähiger und/oder offenzelliger und/oder mobiler Form vorliegt.

10. Funktionsfolie nach einem der vorhergehenden Ansprüche, **dadurch gekennzeichnet, dass** die Wandstärke der Funktionsfolie (1; 101; 201) im ebenen Bereich größer als die Wandstärke im Bereich der Vertiefung (2; 102; 202) ist.

11. Verwendung einer Funktionsfolie nach einem der vorhergehenden Ansprüche als Brennstoffzelle, zur Elektrolyse, in der Fotovoltaik, bei der Katalyse, in der Elektrodialyse, bei der Freeflow Elektrophorese, in bipolare Zellen oder zur Messung von Sauerstoff.

12. Verfahren zur Herstellung einer Funktionsfolie gemäß einem der Ansprüche 1 bis 10, **dadurch gekennzeichnet, dass** eine ebene Funktionsfolie (1; 101; 201) bereichsweise plastisch verformt wird, wobei in Folge der plastischen Verformung zumindest eine Vertiefung (2; 102; 202) entsteht.

13. Verfahren nach Anspruch 12, **dadurch gekennzeichnet, dass** gleichzeitig oder in einem Arbeitsgang eine Mehrzahl von Vertiefungen (2; 102; 202) hergestellt werden.

14. Verfahren nach einem der Ansprüche 12 bis 13, **dadurch gekennzeichnet, dass** die Funktionsfolie (1; 101; 201) als Grünling oder Bräunling ausgeformt, gesintert und anschließend mit weiteren Funktionsschichten beschichtet wird.
